# EUROPEAN PATENT APPLICATION

(11) **EP 4 299 392 A1**
(43) Date of publication of application: **03.01.2024**
(21) Application number: 22182098.8
(22) Date of filing: 30.06.2022
(51) Int. Cl.: B60S 1/34

(54) **WIPER ARM OF A WINDSCREEN WIPER, COVER FOR A WIPER ARM OF A WINDSCREEN WIPER, WINDSCREEN WIPER AND METHOD FOR ATTACHING A COVER TO A WINDSCREEN WIPER ARM**

(71) Applicant: A. Raymond et Cie, 38000 Grenoble (FR)
(72) Inventor: BODE, Karl, 79540 Lörrach (DE); FEGER, Axel, 79540 Lörrach (DE); TOEPPLER, Hanno, 79650 Schopfheim (DE)
(74) Representative: König Szynka Tilmann von Renesse Patentanwälte Partnerschaft mbB Düsseldorf

(57) **Abstract**

Wiper arm of a windscreen wiper, the wiper arm having a first section and a second section, whereby a cover that comprises an elongated, flexible basic body, whereby the basic body covers at least a portion of the first linear section and at least a portion of the second linear section.

## Description

The invention pertains to a wiper arm of a windscreen wiper. The invention also pertains to a cover for a wiper arm of a windscreen wiper. The invention also pertains to a windscreen wiper. The invention also pertains to a method for connecting a cover to a wiper arm of a windscreen wiper.

From US 2016/0368460 A1 a wiper arm of a windscreen wiper is known. The wiper arm is described to have a wiper stem, the wiper stem having two wiper arm segments and a hinge, whereby the wiper arm segments are connected by the hinge. The one of the two wiper arm segments has a portion of enlarged cross section that is arranged closer to the hinge (the portion where the reference sign 44 ends in Fig. 1 of US 2016/0368460 A1) and a portion of reduced, square cross section that propagates from the portion of enlarged cross section away from the hinge, the portion of reduced, square cross section extending along a longitudinal axis. According to US 2016/0368460 A1, a basic body of a cover is arranged on the portion of reduced, square cross section, the basic body being linear in shape and extending along the longitudinal axis of the portion of reduced, square cross section. The cover is called "wiper fluid channeling unit" in US 2016/0368460 A1.

The arrangement known US 2016/0368460 A1 has been considered to be not sufficiently aesthetically pleasing for the car owner's eye, especially for high quality cars. Also problems may arise in the placement of the cover on the portion of reduced, square cross section.

The problem to be solved by the invention is hence to provide a more aesthetically pleasing design of a wiper arm of a windscreen wiper with a cover and/or to improve stable placement of the cover on the wiper arm.

This problem is solved by the wiper arm according to claim 1 or 4, the cover for a wiper arm according to claim 10, the windscreen wiper of claim 17 or the methods of claims 18 and 19. Preferred embodiments are described in the subordinate claims and the description following hereafter.

In a first aspect the invention is based on the concept to first deviate from the wiper arm design of US 2016/0368460 A1 and instead of having a linear wiper arm segment that is connected to a further wiper arm segment by a hinge to provide the wiper arm with a first section and a second section, whereby a cover is provided that comprises an elongated, flexible basic body, whereby the basic body covers at least a portion of the first linear section and at least a portion of the second linear section.

In a preferred embodiment the first section is a first linear section that extends along a first longitudinal axis. The first section may, however also be of any other shape, for example bent.

In a preferred embodiment the section section is a second linear section (3) that extends along a second longitudinal axis. The second section may, however also be of any other shape, for example bent. In a preferred embodiment, the first section is of different shape compared to the second section. For example the first section may be a first linear section, while the second section may be of non-linear shape, for example bent. For example the second section may be a second linear section, while the first section may be of non-linear shape, for example bent. For example the first section may be a non-linear section, for example bent, while the second section may be of non-linear shape, for example bent, but differently shaped, for example differently bent compared to the first section. In an alternative, the first section and the second section may be of the same shape. For example the first section may be a first linear section and the second section may be a second linear section. For example the first section may be of non-linear shape, for example bent, and the second section may be of an equally non-linear shape, for example equally bent.

In a preferred embodiment, where the first section is a first linear section and the second section is a second linear section the first linear axis extends at an angle to the second linear axis. However, designs are also feasible, where the first linear axis and the second linear axis are coplanar or parallel.

In a preferred embodiment the second section is arranged adjacent to the first section. However, designs are also feasible, where further sections, for example a third section, for example a third linear section or for example a third section that is bent, are arranged between the first section and the second section.

In a preferred embodiment a first linear section and a second linear section that is arranged adjacent to the first linear section, whereby the first linear section extends along a first longitudinal axis and the second linear section extends along a second longitudinal axis, whereby the first linear axis extends at an angle to the second linear axis. In addition to this re-design of the wiper arm, a cover is provided that comprises an elongated, flexible basic body, whereby the basic body covers at least a portion of the first linear section and at least a portion of the second linear section.

In providing a cover with an elongated, flexible basic body that covers at least a portion of the first linear section and at least a portion of the second linear section, more of the sections of the wiper arm can be covered, which allows for an aesthetically pleasing appearance of the wiper arm. In addition, given that the cover covers at least a portion of the first linear section and at least a portion of the second linear section the friction is increased, which increases the holding forces that hold the cover in place on the wiper arm.

The invention according to a first aspect relates to a wiper arm of a windscreen wiper. Windscreen wipers commonly have a wiper arm. The wiper arm typically is attached to a drive shaft at one end, a rotation of the drive shaft leading to the wiper arm being rotated/swivelled about a rotational axis that typically runs through the drive shaft. The wiper arm typically comprises at least two wiper arm segments, whereby a hinge is arranged between a first wiper arm segment and a second wiper arm segment. Typically one of the wiper arm segments is the one that is attached to the drive shaft. Typically a spring is arranged that connects the two wiper arm segments across the hinge in order to pretension the wiper arm towards a wiping position. Typically a wiper blade is attached to a wiper arm segment, for example directly with a blade connector arranged on the first linear section or for example by a separate blade carrier that contains a blade connector and is carried by the first linear section.

Wiper arms are often designed to have a more geometrically complex portion in that part of the wiper arm that is used to attach the wiper arm to the drive shaft and that contains the spring. However, towards that part of the wiper arm to which the wiper blade is connected, the geometric design of the wiper arm often becomes more simple. Often, this part of the wiper arm has the shape of a simple rod, typically a metal rod.

The very simple design of the wiper arm in certain sections of the wiper arm can lead to the problem that this part of the wiper arm is not especially adapted to reduce the resistance against air that flows over the wiper arm. Also, it is sometimes perceived that the simple design of the wiper arm is not aesthetically pleasing.

Providing a cover for a wiper arm of a windscreen wiper gives raise to the possibility of better adapting the windscreen wiper to reduced friction for air streaming over the windscreen wiper. Providing the cover allows for the wiper arm to be continued to be of simple design, while the cover can be used to adapt the windscreen wiper to reduced drag and to improve the aerodynamics of the windscreen wiper. In addition or as an alternative, a cover for a wiper arm of a windscreen wiper can provide solutions that are more aesthetically pleasing than a simple wiper arm rod. In addition or as an alternative, a cover for a wiper arm allows for auxiliary elements to be better attached to the wiper arm, for example hoses, pipes or channels which in certain designs of windscreen wipers are used to transport a washing fluid to nozzles arranged close to or at the wiper blade of a windscreen wiper.

The wiper arm according to the invention has a first linear section and a second section that preferably is a second linear section. The first linear section extends along a first longitudinal axis. In the embodiments were the second section is a second linear section, the second linear section extends along a second longitudinal axis. In a preferred embodiment the first linear section is an elongated linear section and/or the second linear section is an elongated linear section. An elongated linear section is understood to be a segment of a body, which segment within a three-dimensional, orthogonal system of coordinates is substantially longer in one direction (x-axis; length) than in any of the two other directions (y-axis, width; z-axis, height). In a preferred embodiment, the longest extent of the elongated linear section in the one direction (x-axis; length) is longer by a factor of 2, preferably by a factor of 3, preferably by a factor of more than 4 than the longest extent of the elongated linear section in any of the two other directions (y-axis, width; z-axis, height).

In a preferred embodiment the shape and/or size of the cross section of the first linear section in planes perpendicular to the first longitudinal axis stays the same for the majority (more than 50%), preferably for the overwhelming majority (more than 75%) of the cross sections that the first linear section has in planes perpendicular to the first longitudinal axis. In a preferred embodiment, the shape of the cross section of the first linear section in planes perpendicular to the first longitudinal axis for the majority (more than 50%), preferably for the overwhelming majority (more than 75%) of the cross sections that the first linear section has in planes perpendicular to the first longitudinal axis is a rectangular cross section, whereby the first linear section may be a hollow rod, for example a hollow rod with rectangular cross section.

In a preferred embodiment the shape and/or size of the cross section of the second linear section in planes perpendicular to the second longitudinal axis stays the same for the majority (more than 50%), preferably for the overwhelming majority (more than 75%) of the cross sections that the second linear section has in planes perpendicular to the second longitudinal axis. In a preferred embodiment, the shape of the cross section of the second linear section in planes perpendicular to the second longitudinal axis for the majority (more than 50%), preferably for the overwhelming majority (more than 75%) of the cross sections that the second linear section has in planes perpendicular to the second longitudinal axis is a rectangular cross section, whereby the second linear section may be a hollow rod, for example a hollow rod with rectangular cross section.

In a preferred embodiment, the length of the first linear section (= the extend of the first linear section along the first longitudinal axis) is longer than the length of the second linear section (= the extend of the second linear section along the second longitudinal axis). In a preferred embodiment, the length of the first linear section is longer than the length of the second linear section by a factor of more than 1,5, preferably by a factor of more than 2,0, preferably by a factor of more than 3.

The second linear section that is arranged adjacent to the first linear section. In a preferred embodiment a transition from the first linear section to the second linear section is provided that is a rigid transition. The transition from the first linear section to the second linear section in a preferred embodiment is provided by a bend. In such an embodiment, the first linear section and the second linear section would be sections of the same one-piece element, for example a metal rod, whereby the distinction between the first linear section and the second linear section would be provided by the bend. In an alternative embodiment, the first linear section and the second linear section are initially two separate bodies that are rigidly attached to one-another, for example by way of welding or glueing.

In one aspect of the invention, the first linear axis extends at an angle to the second linear axis. However, embodiments of the invention are also feasible, where the first linear axis and the second linear axis are coaxial or parallel. In a preferred embodiment the angle between the first linear axis and the second linear axis is between 175° and 90°, preferably between 170° and 90°, preferably between 170° and 100°, preferably between 165° and 115°.

According to the invention, the wiper arm is provided with a cover. The cover comprises an elongated basic body, preferably an elongated, flexible basic body, whereby in a first aspect of the invention the basic body covers at least a portion of the first linear section and at least a portion of the second linear section or in a second aspect of the invention abuts against the endface of the second section. Given that in a first aspect the first linear section extends at an angle to the second linear section and hence given that a transition exists between the first linear section and the second linear section, the cover in the installed state on the first linear section and the second linear section comprises a transition between a first section of the cover and a second section of the cover. The transition between the first section of the cover and the second section of the cover preferably is a bend.

In a preferred embodiment, the cover comprises a continuous channel, whereby at least a portion of the first linear section and at least a portion of the second linear section is arranged within the channel. In an alternative embodiment, the cover comprises a first channel and a second channel, whereby at least a portion of the first linear section is arranged in the first channel and at least a portion of the second linear section is arranged in the second channel. In a preferred embodiment, a portion of the wiper arm is not fully encompassed by the cover between the first channel and the second channel. In a preferred embodiment a transition in form of a bend is provided between the first linear section and the second linear section, whereby in a preferred embodiment the bend is not arranged in a channel of the basic body and is only partially covered by the cover and in an especially preferred embodiment is not encompassed by the cover, but for example only covered on one side by the cover.

In a preferred embodiment, the longitudinal extend of the portion of the first linear section that is covered by the cover is longer than the longitudinal extend of the portion of the second linear portion that is covered by the cover. In a preferred embodiment the longitudinal extend of the portion of the first linear section that is covered by the cover is longer than the longitudinal extend of the portion of the second linear portion that is covered by the cover by a factor of more than 1,25, preferably a factor of more than 1,5 and especially preferred by a factor of more than 2,0.

In a preferred embodiment, the basic body is pulled onto the wiper arm. In a preferred embodiment the basic body acts like a sleeve that is pulled over the wiper arm. In a preferred embodiment the basic body holds onto the wiper arm by its own resilience.

In a preferred embodiment the basic body is a one-piece body. In a preferred embodiment the basic body is made from a material that has a Young's modulus in the range of 0,5 to 800 MPa, preferably of 0,5 to 500 MPa. In a preferred embodiment the basic body is made of TPE-V (a vulcanise Thermoplastic elastomer).

In a preferred embodiment, the cover has a thickness of more than 0,5mm, preferably of more than 1mm, preferably of more than 1,2mm.

In a preferred embodiment a fluid channel is arranged in the basic body. In a preferred embodiment a connector piece is provided on that part of the basic body that covers the second linear section, the connector piece having a hose interface suitable for a hose for a fluid to be connected to the hose interface. In a preferred embodiment the connector piece is in fluid communication with a fluid channel that is arranged in the basic body, such that fluid that enters into the connector piece from the hose can flow into the fluid channel in the basic body. In a preferred embodiment, the fluid channel in the basic body extends from the connector piece, which is arranged on that part of the basic body that covers the second linear section, into that part of the basic body that covers the first linear section.

In a preferred embodiment the cover comprises a connector piece, the connector piece having a hose interface suitable for a hose for a fluid to be connected to the hose interface. As indicated above, the presence of a connector piece may be combined with a preferred embodiment, in which a fluid channel is arranged in the basic body. However, providing a connector piece in a preferred embodiment is also feasible without the presence of a fluid channel in the basic body. In a preferred embodiment the connector piece is provided on that part of the cover that covers a portion of the first linear section. In a preferred embodiment, the connector piece is provided on that part of the cover that covers a portion of the first linear section and a hose is provided that extends from the connector piece along that part of the cover that covers a portion of the first linear section and preferably also extends along that part of the cover that covers a portion of the second linear section. In a preferred embodiment, the basic body has fasteners, preferably clips that hold the hose to the basic body. In a preferred embodiment, a linear groove is provided on the basic body and a portion of the hose is arranged in the linear groove.

In a preferred embodiment the basic body has a first end and a second end, whereby the connector piece is arranged at the first end and whereby the basic body has clips for holding a hose arranged inbetween the first end and the second end. In a preferred embodiment, the first end is the end of the cover that is arranged in that part of the cover that covers a portion of the first linear section and the second end is arranged in that part of the cover that covers a portion of the second linear section.

In a preferred embodiment an elastic connection, for example a spring element is provided at one end of the basic body. The spring element can be used to pretension the basic body into one direction along the extend of the wiper arm. In a preferred embodiment the wiper arm comprises a blade carrier that contains blade connector to which a wiper blade can be connected, whereby the blade carrier is arranged adjacent the cover. In a preferred embodiment the spring element is arranged on that end of the basic body that is adjacent the blade carrier.

In a preferred embodiment, the wiper arm has a hinge, whereby the second section, especially the second linear section is arranged closer to the hinge than the first linear section. In a preferred embodiment, the second section, especially the second linear section is arranged between the first linear section and the hinge. In a preferred embodiment, a wiper blade is connected to the wiper arm by a blade connector or a blade carrier with a blade connector, whereby the first linear section is arranged closer to the blade connector or blade carrier respectively than the second section, especially the second linear section. In a preferred embodiment, the first linear section is arranged between the blade connector or the blade carrier respectively and the second section, especially the second linear section.

The invention according to a further aspect of the invention provides for a cover for a wiper arm of a windscreen wiper, especially for a wiper arm according to the above described design, the cover comprising an elongated basic body extending from a first end to a second end along a longitudinal axis, whereby an elastic connection is arranged at the first end of the basic body.

In a preferred embodiment, the cover according to the invention disposes with the idea of having the connector piece arranged within the basic body and for the connector piece to be designed more individually. This is achieved by providing an elastic connection, whereby the elastic connection in a preferred embodiment is arranged between the basic body and the connector piece and whereby the elastic connection attaches the connector piece to the basic body. The preferred embodiment hence structurally makes the connector piece independent from the elongated basic body. This structural separation allows for the connector piece to be designed more freely on the one hand. Furthermore, the structural divide between the connector piece and the basic body allows for relative movements of the connector piece relative to the basic body. The elastic connection provided according to the invention on the one hand attaches the connector piece to the basic body and hence makes sure that the connector piece still can be handled as one with the elongated basic body. In a preferred embodiment, this design allows for the connector piece to be supported by the basic body, preferably for the connector piece to be only supported by the basic body. The elastic connection provided according to the invention by way of its elasticity allows for the relative movement between the connector piece and the elongated body, thereby allowing the cover according to the invention to better take up manufacturing tolerances of the elements surrounding it. At the same time, the elastic connection provides for the connector piece to be attached to the basic body, simplifying the handling of the cover and especially simplifying the assembly of the cover to the wiper arm.

The cover according to the invention is provided with a basic body. The basic body can be designed as an elongated basic body. An elongated basic body is understood to be a body that within a three-dimensional, orthogonal system of coordinates is substantially longer in one direction (x-axis, length) than in any of the two other directions (y-axis, width; z-axis, height). In a preferred embodiment, the extent of the elongated body in the one direction (x-axis, length) is longer by a factor of 2, preferably by a factor of 3, preferably by a factor of more than 4 than the extent of the body in any of the two other directions (y-axis, width; z-axis, height).

In a preferred embodiment the elongated basic body extends from a first end to a second end along a longitudinal axis (x-axis). In a preferred embodiment of the windscreen wiper according to the invention, the longitudinal axis is arranged parallel to or coaxial with a longitudinal axis of the wiper arm or in embodiments, where the wiper arm has several sections that extend along individual longitudinal axis and are arranged at angles to each other is arranged parallel to or coaxial with a section of the wiper arm that extends along a longitudinal axis, preferably the first linear section, if a first linear section is present.

According to a preferred embodiment, the cover has a connector piece, the connector piece having a hose interface suitable for a hose for a fluid to be connected to the hose interface. The hose interface can be a recess into the connector piece. In a preferred embodiment, the recess is provided by rims that protrude into the recess and that can be used to better hold an end of an elastic hose. In an alternative, the hose interface can be a protruding tip or protruding cone with a central channel, whereby the hose can be slid over the tip or cone. On the outside surface of the tip or the cone, rims can be provided that again can be used to hold back the end of an elastic hose that has been slid over the tip or the cone.

According to this embodiment, the connector piece is a separate element of the cover. In a preferred embodiment, the connector piece is not encapsulated by the basic body. In a preferred embodiment, the connector piece can move relative to the basic body at least in one direction of a three-dimensional orthogonal system of coordinates. In a preferred embodiment, the connector piece can be moved relative to the basic body along the longitudinal axis of the basic body.

According to this part of the invention, an elastic connection is provided, whereby the elastic connection in a preferred embodiment is arranged between the basic body and the connector piece. The elastic connection attaches the connector piece to the basic body. Because of the elasticity of the elastic connection, the connector piece can be moved relative to the basic body. At the same time, the elastic connection attaches the connector piece to the basic body, thereby allowing the basic body and the connector piece to be handled as one, which simplifies the attachment of the cover to the wiper arm.

In a preferred embodiment, the basic body is made from an elastic material. An elastic material is understood to be a material that has an elastic modulus or Young's modulus in the range of 0,5 to 800 MPa, preferably of 0,5 to 500 MPa. In a preferred embodiment the basic body is made of TPE-V (a vulcanise Thermoplastic elastomer).

In a preferred embodiment, the cover has a thickness of more than 0,5mm, preferably of more than 1mm, preferably of more than 1,2mm.

In a preferred embodiment, the elasticity of the elastic connection is higher than the elasticity of the basic body. In a preferred embodiment, if a linear force of a predetermined magnitude F1 is applied to the elastic connection, preferably applied to the elastic connection along the longitudinal axis or parallel to the longitudinal axis, the longitudinal extent of the elastic connection will be diminished by the factor x1, while if the same force with the same magnitude F1 is applied to the basic body, preferably applied to the basic body along the longitudinal axis or parallel to the longitudinal axis the longitudinal extent of the basic body will be diminished by a factor x2, whereby x1 is larger than x2.

In a preferred embodiment, the elastic connection contains cut-outs. The term "cut-out" is not limited to material being cut-out in a cutting process from a material body. The term "cut-out" generally refers to the absence of material in a certain space. The "cut-out" can be provided in a molding process, for example, by simply not bringing any material into the space, where the cut-out is to be. The cut-outs increase the elasticity of the elastic connection. In a preferred embodiment the cut-outs are slits in the material that is used for the elastic connection, especially preferred slits that pass through the complete height (thickness) of the material. The slits can have a noticeably size. In a preferred embodiment, the slits are windows in the material used for the elastic connection. In a preferred embodiment, the slits and especially the windows are of linear shape and extend in a direction parallel to the longitudinal axis of the basic body and especially preferred parallel to the first longitudinal axis of the first linear section. In an alternative embodiment, the elastic connection can comprise at least one ring-shaped element of elastic material, especially an element of circular shape, like for example a donut, or elements of elliptical shape, while polygonal shaped rings like shapes of a honeycomb are also feasible. In a preferred embodiment the individual ring-shaped element of the elastic connection is attached to neighbouring elements by way of bridges or bars. Preferably the bridges or bars extend radially outward from the ring shaped element. In a preferred embodiment the elastic connection has more than one, preferably two such ring-shaped elements. In a preferred embodiment the elastic connection contains less than 20, preferably less than 15, preferably less than 10, preferably less than 5 such ring-shaped elements. In a preferred embodiment, in which the elastic connection comprises more than one ring-shaped element, the ring shaped elements are aligned along an axis, preferably along an axis that is either coaxial with or parallel with an longitudinal axis of the basic body of the cover and/or either coaxial with or parallel with a first longitudinal axis of a first linear section of the wiper arm. In a preferred embodiment, in which the elastic connection comprises more than one ring-shaped element, the ring shaped elements are interconnected by one, preferably only by one bridge or bar. In a preferred embodiment the one bridge or bar is arranged on an axis that is either coaxial with or parallel with an longitudinal axis of the basic body of the cover and/or either coaxial with or parallel with a first longitudinal axis of a first linear section of the wiper arm.

In a preferred embodiment, the elastic connection is made as one piece with the basic body, preferably by way of 2K-moulding. In a preferred embodiment, the basic body has an end face at its first end, whereby the elastic connection protrudes from this end face. In a preferred embodiment, the end face has a free standing surface section and the elastic connection protrudes from the free standing surface section in a rod-like manner. In a preferred embodiment, the cross-section of the rod of the elastic connection that protrudes over the free standing surface of the basic body is smaller than 75% of the free end surface of the basic body, preferably less than 60%, preferably less than 50%.

In a preferred embodiment, the elastic connection is arranged at the first end of the basic body. In a preferred embodiment, the connector piece is arranged such that the hose interface is pointing from the first end of the basic body towards the second end of the basic body. In this preferred embodiment, the hose interface hence is hidden below the basic body and as regards the longitudinal extent of the basic body from the second end to the first end is pointing backwards towards the second end. In a preferred embodiment, a hose that is attached to the hose interface leads along the basic body.

In a preferred embodiment, the connector piece is made from a rigid material. A rigid material is understood to be a material with an elastic modulus/Young's modulus of more than 800 MPa, preferably of more than 1000 MPa, preferably of more than 1100 Mpa. In a preferred embodiment, the connector piece is made from Polyamid, for example from PA6 or PA 12.

In a preferred embodiment, the elastic connection has a protruding pin and the connector piece has a socket, whereby the pin is arranged in the socket. The provision of a pin to connect the elastic connection to the connector piece provides for a simple means of connecting the elastic connection to the connector piece. In a preferred embodiment, the pin extends along a pin axis that is perpendicular to the longitudinal axis. In a preferred embodiment, the pin extends along a pin axis that is perpendicular to the longitudinal axis and offset to the longitudinal axis.

In a preferred embodiment, wiper arm comprises a blade connector. A blade connector is an element that allows a blade of a windscreen wiper to be attached to the wiper arm. The blade connector can, for example be a clip or a recess into which a clip arranged on the wiper blade can be inserted and attached to. The blade connector can be directly arranged on the wiper arm, for example directly arranged on the first linear section of the wiper arm. In an alternative, a separate blade carrier is provided that contains the balde connector. The blade carrier can be arranged on the wiper arm, for example can be arranged on the first linear section of the wiper arm. The blade carrier can, for example comprise a hole or a channel through which a section of the wiper arm, for example a section of the first linear section can pass thereby holding the blade carrier on the wiper arm.

In a preferred embodiment the blade carrier is an elongated body. In a preferred embodiment, the blade carrier is arranged at one end of the basic body. In a preferred embodiment, the blade carrier overlaps with the first end of the basic body. In a preferred embodiment, the blade carrier overlaps with the elastic connection. In a preferred embodiment, the connector piece is fixedly attached to the blade carrier. In a preferred embodiment, the blade carrier is overmolded over the connector piece. In a preferred embodiment, the longitudinal axis of the blade carrier is parallel to or coaxial with the longitudinal axis of the basic body. Given that in the embodiment described here the connector piece is moveable relative to the basic body due to the elastic connection and given that in this embodiment the connector piece is fixedly attached to the blade carrier, this leads to the blade carrier being moveable relative to the basic body on the one hand, but being connected to the basic body via the connector piece and the elastic connection on the other hand, too.

In a preferred embodiment, the blade carrier has a fluid channel. In a preferred embodiment, a fluid channel passes from the hose interface of the connector piece through the connector piece, whereby said fluid channel of the connector piece is in fluid communication with a fluid channel in the blade carrier.

In a preferred embodiment, a fluid nozzle is provided at the blade carrier. In a preferred embodiment, the fluid nozzle is in fluid connection with the fluid channel of the blade carrier.

In a preferred embodiment, a fluid nozzle is provided at the basic body. In a preferred embodiment, the fluid nozzle is in fluid connection with the fluid channel of the basic body.

In a preferred embodiment, the blade carrier has a blade connector that is suitable for connecting the wiper blade to the blade carrier. In a preferred embodiment, the blade connector is designed in such a manner that it allows the wiper blade to swivel relative to the blade carrier. In a preferred embodiment the blade carrier can be connected, preferably releasably connected to the wiper arm. In a preferred embodiment the connection between the blade carrier and the wiper arm is such that the position of the blade carrier on the wiper arm is fixed. In conjunction with a particular embodiment of the wiper arm, where the wiper arm has a second section with an endface, an embodiment is possible, where the cover is held between the endface of the second section on the one side and the blade carrier on the other side, preferably in conjunction with an elastic component that excerts a spreading force and hence creates a pretension of the cover against the endface.

A windscreen wiper according to the invention comprises a wiper arm and a wiper blade. The windscreen wiper according to the invention can have a wiper arm according to the invention and/or can have a cover according to the invention.

In the method for connecting a cover to a wiper arm according to the invention the cover is pulled over the first linear section. In a preferred embodiment of the method, initially a wiper arm having a first linear section and a second linear section that is arranged adjacent to the first linear section is provided, whereby the first linear section extends along a first longitudinal axis and the second linear section extends along a second longitudinal axis, whereby the first linear axis extends at an angle to the second linear axis. After this a cover that comprises an elongated, flexible basic body is pulled over the first linear section and the second liner section such that the basic body covers at least a portion of the first linear section and at least a portion of the second linear section. In an alternative embodiment, initially a wiper arm having a first linear section and a second section that is arranged adjacent to the first linear section is provided, whereby the first linear section extends along a first longitudinal axis and whereby the second section has an endface and the first linear section protrudes from the endface and extends away from the endface along the first longitudinal axis, whereby at the endface the cross-section of the endface is larger than the cross-section of the first linear section. Then a cover that comprises an elongated, flexible basic body is pulled over the first linear section such that the basic body covers at least a portion of the first linear section and abuts against the endface.

In a method according to the invention for connecting a cover according to the invention to a wiper arm having a first linear section, in a preferred embodiment, initially a cover is provided, whereby the cover comprises
- an elongated basic body extending from a first end to a second end along a longitudinal axis,
- a connector piece, the connector piece having a hose interface suitable for a hose for a fluid to be connected to the hose interface,
characterized by an elastic connection, whereby the elastic connection is arranged between the basic body and the connector piece and whereby the elastic connection attaches the connector piece to the basic body. According to this embodiment of the method, this cover is pulled over the first linear section. In a preferred embodiment, the first linear section is the first linear section of a wiper arm according to the invention.

In a preferred embodiment, a blade carrier is provided as part of the methods according to the invention. In a preferred embodiment, the blade carrier is slid onto the first linear section after the cover has been slid onto the first linear section. In a preferred embodiment the blade carrier is fixed to the first linear section. In a preferred embodiment, the blade carrier is attached to the cover, such that the blade carrier can be slid onto the first linear section jointly with the cover. In a preferred embodiment the blade carrier is fixed to the first linear section.

In the following the invention will be describe with reference to Figures. These Figures only show possible embodiments of the invention and do not limit the scope of the invention to these embodiments. In these Figures
- Fig. 1: shows a schematic perspective view onto a first embodiment of a wiper arm according to the invention;
- Fig. 2: shows a schematic perspective view onto a second embodiment of a wiper arm according to the invention;
- Fig. 3: shows a schematic perspective, partially sectional view onto a third embodiment of a wiper arm according to the invention, whereby Fig. 3 shows the wiper arm without the cover;
- Fig. 4: shows a schematic perspective, partially sectional view of the wiper arm of Fig. 3 with cover;
- Fig. 5: shows a schematic perspective view onto a fourth embodiment of a wiper arm according to the invention;
- Fig. 6: a side view onto a fifth embodiment of a wiper arm according to the invention;
- Fig. 7: a enlarged side view onto the detail X marked by the circle X in Fig. 6, but with the second end of the basic body of the cover being a little displaced from the endface of the second linear section;
- Fig. 8: an exploded view onto the cover and the blade carrier of the wiper arm according to Fig. 6;
- Fig. 9: shows a schematic perspective view of an embodiment of an elastic connection that can be arranged on the basic body of the cover;
- Fig. 10: shows a schematic perspective view a further embodiment of an elastic connection that can be arranged on the basic body of the cover;
- Fig. 11: shows a schematic perspective view a further embodiment of an elastic connection that can be arranged on the basic body of the cover;
- Fig. 12: shows a schematic perspective view the overlap at the end of the blade carrier and the first end of the basic body including the connector piece with the end of the blade carrier shown see-through;
- Fig. 13: shows the schematic perspective view of Fig. 12 with end of the blade carrier shown in full body;
- Fig. 14: shows a schematic perspective view the first end of the basic body including the connector piece;
- Fig. 15: shows a schematic perspective view of the part of the basic body close to the first end of the basic body together with the elastic connection arranged at the first end of the basic body;
- Fig. 16: shows the view of Fig. 15 with the connector piece attached to the elastic connection and a hose attached to the connector piece;
- Fig. 17: shows the view of Fig. 16 with a blade carrier attached to the connector piece.

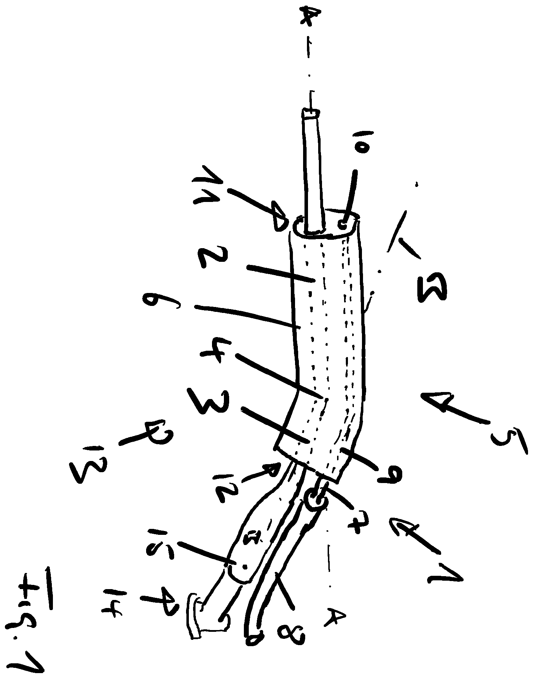

Fig. 1 shows a wiper arm 1 of a windscreen wiper. The wiper arm 1 has a first linear section 2 and a second linear section 3. The second linear section 3 that is arranged adjacent to the first linear section 2. A transition in form of a bend 4 exists between the first linear section 2 and the second linear section 3. The first linear section 2 and the second linear section 3 are part of one metal rod, whereby the distinction between the first linear section 2 and the second linear section 3 is provided by bending the metal rod to create the bend 4.

The first linear section 2 extends along a first longitudinal axis A and the second linear section 3 extends along a second longitudinal axis B. The first linear axis extends at an angle to the second linear axis, which is about 140°.

In the embodiment shown in Fig. 1 a cover 5 that comprises an elongated, flexible basic body 6 is provided. The basic body 6 covers at least a portion of the first linear section 2 and at least a portion of the second linear section 3.

In the embodiment shown in Fig. 1, the cover 5 comprises a connector piece 7. The connector piece 7 has a hose interface. A hose 8 for a fluid is connected to the hose interface. In the embodiment shown in Fig. 1 a fluid channel 9 is additionally arranged in the basic body 6. The fluid channel 9 terminates in a hole 10. The hole 10 is provided at a first end 11 of the basic body 6, whereby the first end 11 is provided on that part of the basic body 6 that covers a portion of the first linear section 2. In the embodiment of Fig. 1 the connector piece 7 is provided at a second end 12 of the basic body 6, whereby the second end 12 is provided on that part of the basic body 6 that covers a portion of the second linear section 3. A further piece - not shown in Fig. 1 - for example a blade carrier 23 may be arranged adjacent the first end 11. Suitable means to convey the fluid from the hole 10 into a fluid channel on the further piece may also be provided.

The first linear section 2 and the second linear section 3 form a wiper arm segment 13. A further wiper arm segment 14 is provided. The further wiper arm segment 14 can be connected to a rotational drive. A hinge 15 is provided between the wiper arm segment 13 and the wiper arm segment 14.

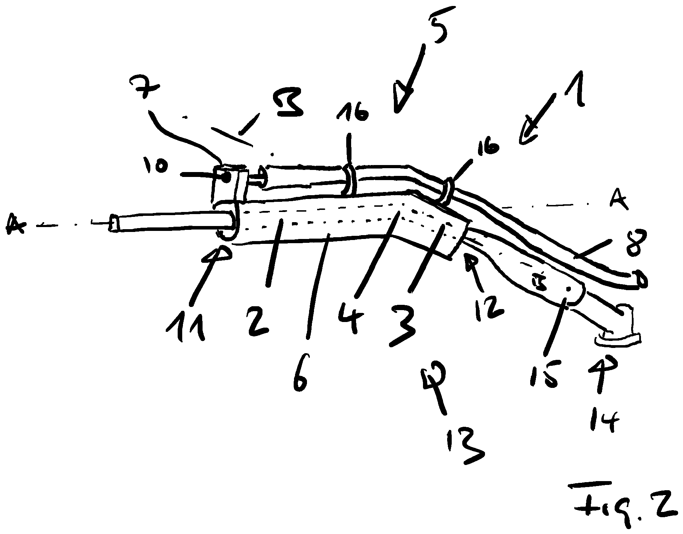

The embodiment of Fig. 2 differs from the embodiment of Fig. 1 primarily in that the fluid channel 9 that in the embodiment of Fig. 1 is present has been disposed of. In the embodiment of Fig. 2, the connector piece 7 has been arranged on the first end 11. The hose 8 is led in parallel along the basic body 6. The hole 10 is arranged in the connector piece 7. Clips 16 are provided on the basic body 6 that hold the hose 8.

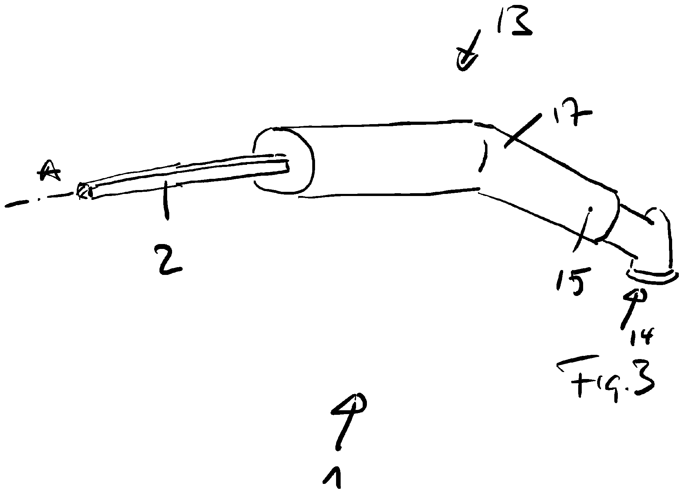

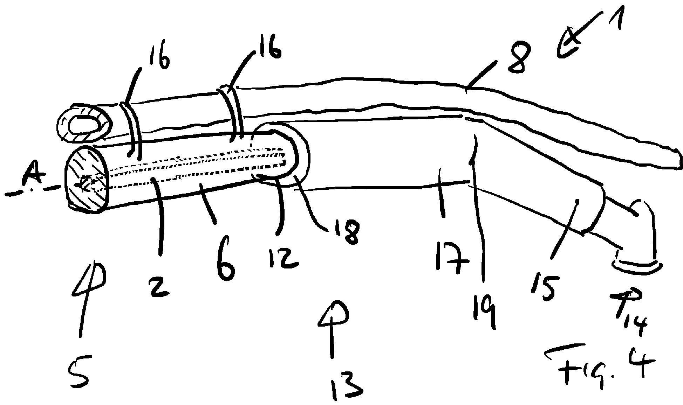

Fig. 3 and 4 show a further embodiment of a wiper arm according to the invention. In the embodiment of Fig. 3 and 4, the wiper arm 1 has a first linear section 2, similar to the design of Fig. 1 and 2. The second section 17 of the wiper arm 1 is, however, only partially linear and contains an endface 18 and a bend 19. The endface 18 is a flat surface. The bend 19 is incorporated in the material of the second section 17. The cross-sectional areal of the first linear section 2 is rectangular and is smaller in size than the endface 18 of the second section.

In Fig. 3 and 4 the left hand end of the respective Fig. is section. The first linear section 2 continues further towards the left than what is shown in Fig. 3 and 4. The basic body 6 of the cover 5 continues further towards the left than what is shown in Fig. 4.

The second end 12 of the basic body 6 abuts against the endface 18 of the second section 17.

Clips 16 are provided to hold the hose 8 to extend in parallel to the first longitudinal axis A along the basic body 6. The hose 8 can be connected to a connector piece 7 (not shown in Fig. 4) that - comparable to the arrangement in Fig. 2 - can be arranged at the first end 11 (not shown in Fig. 4) of the basic body 6.

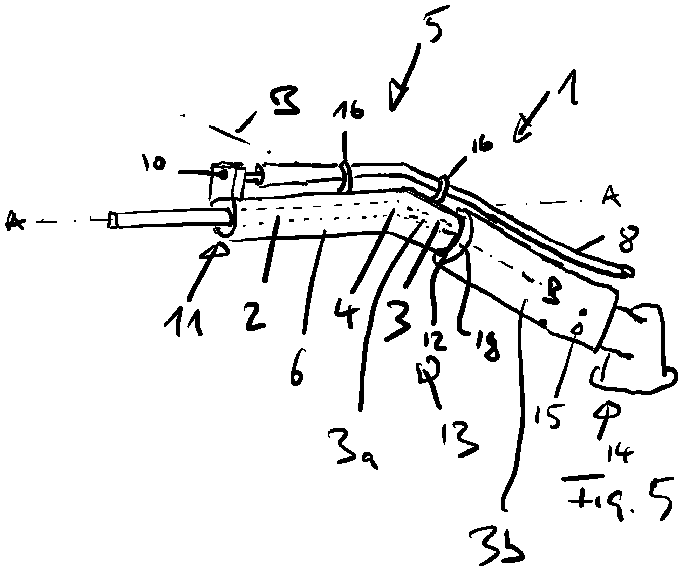

While Fig. 1 and 2 show the second end 12 of the basic body 6 to have a larger cross section than the second line section 3 in the area, where the second end 12 is located, the design shown in Fig. 4 as regards the second end 12 abutting against an endface 18 of the second section 17 can also be implemented into the designs of Fig. 1 and 2. In such an embodiment, the cross-section of the second line section 3 would be increased and a step showing an endface 18 would be introduced. In such a modification, the second end 12 would be abutting against such an endface 18. Fig. 5 shows such a modification. In such a design, the second linear section 3 would consist of a slim part 3a with a smaller cross-section and a wide part 3b with a bigger cross-section, the endface 18 marking the transition from the wide part 3b to the slim part 3a of the second linear section 3.

Within the general concept of the invention, the design of Fig. 3 and 4 could also be adapted to make the second section 17 a second linear section 3. In such a design, the first linear section 2 and the second linear section 3 could be arranged co-axially or with the first longitudinal axis A being arranged in parallel to the second longitudinal axis B.

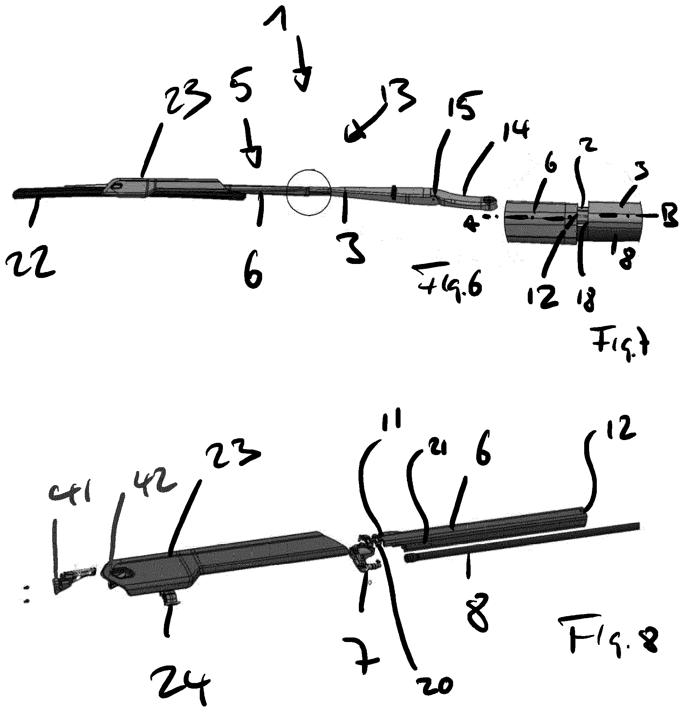

Such a design in implemented in the embodiment shown in the Fig. 6 to 8. As can best be seen in the enlarged view of Fig. 7 that by way of showing the second end 12 of the basic body 6 of the cover 5 being a little displaced from the endface 18 of the second linear section 3 allows a better view onto the first linear section 2, the first longitudinal axis A of the first linear section is coaxially or slightly offset but parallel to the second longitudinal axis B. The design of Fig. 6 to 8 could also be adopted to have the first linear axis extend at an angle to the second linear axis. The angle could be around 175°, hence keeping the general appearance of the embodiment of Fig. 6 to 8; but could also be changed into a substantial angle, similar to the one shown in Fig. 1 and 2.

In the embodiment of Fig. 6 to 8, in the installed position, the second end 12 of the basic body 6 abuts against the endface 18 of the second linear section 3 (see for example Fig. 6). Fig. 7 could be seen as an intermediate position, when the cover 5 is slid onto the first linear section 2 of the wiper arm 1.

In the design of Fig. 6 to 8, the connector piece 7 is arranged at the first end 11 of the basic body 6. An elastic connection 20 by way of a spring is arranged at the end of the basic body 6. The connector piece 7 is attached to the elastic connection 20. Hence, within the flexibility of the elastic connection 20, the connector piece 7 is attached to, but moveable in relation to the basic body 6. A groove 21 is provided that extends almost along the complete length of the basic body 6. The hose 8 can be inserted into and held in the groove 21.

A wiper blade 22 is provided. The wiper blade 22 is attached to a blade carrier 23 by way of a blade connector 24.

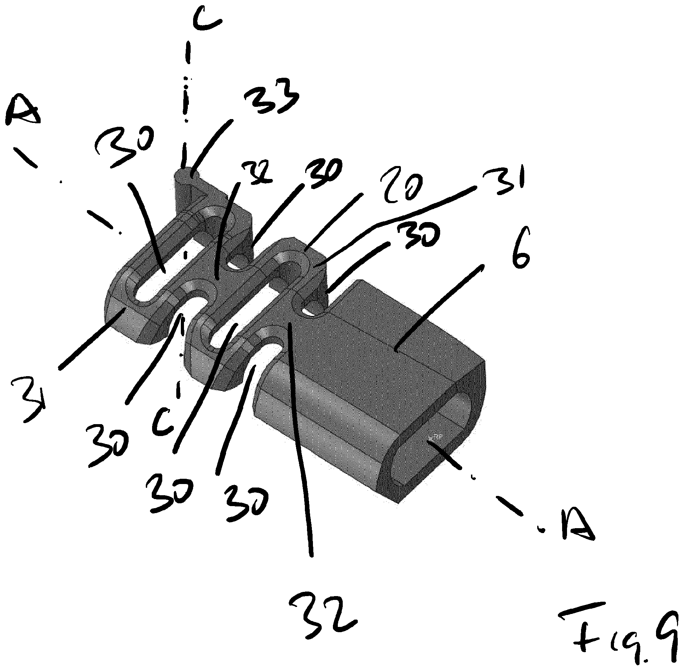

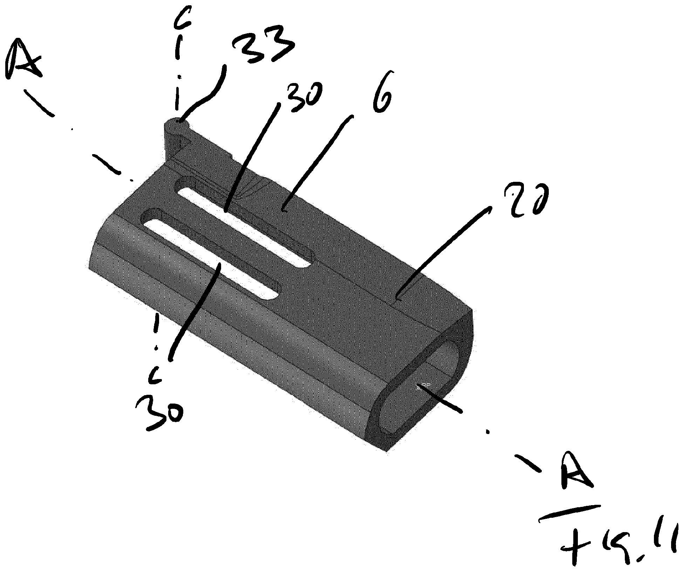

Fig. 9 to 11 show different embodiments of the elastic connection 20. They show that the elastic connection can contains cut-outs 30. In the embodiment shown in Fig. 11 the cut-outs 30 are slits in the material that is used for the elastic connection 20, namely slits that pass through the complete height of the material. The slits have a noticeably size and can be said to be windows in the material used for the elastic connection 20. The slits in the embodiment of Fig. 11 are of linear shape and extend in a direction parallel to the longitudinal axis of the basic body 6.

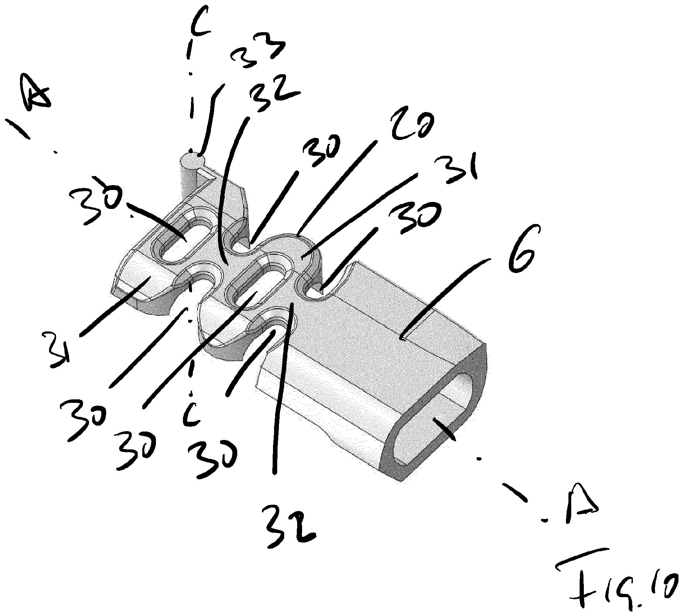

Fig. 9 and 10 show that the cut-outs 30 can be used to create ring-shaped elements 31 that form part of the elastic connection 20. In the design shown in Fig. 9 and 10, the ring-shaped elements 31 are of flattened elliptical shape, whereby the designs of Fig. 9 and 10 primarily differ in the thickness of the material left between the cut-outs 30. The two ring-shaped elements 31 of the designs of Fig. 9 and 10 are attached to neighbouring elements by way of bridges 32, whereby in the embodiment of Fig. 9 and 10, only one bridge 32 is used to connect the ring-shaped element 31 to a neighbouring element, the respective bridge 32 extending radially from the ring-shaped element 31. The ring-shaped elements 31 are aligned along an axis, that is either coaxial with or parallel with an longitudinal axis of the basic body 6. The bridges 32 are arranged on an axis that is either coaxial with or parallel with an longitudinal axis of the basic body 6.

In the embodiments of Fig. 9 to 11 the elastic connection 20 has a protruding pin 33 and the connector piece 7 has a socket 34, whereby the pin 33 is arranged in the socket 34. The pin 33 extends along a pin axis C that is perpendicular to the longitudinal axis A and offset to the longitudinal axis.

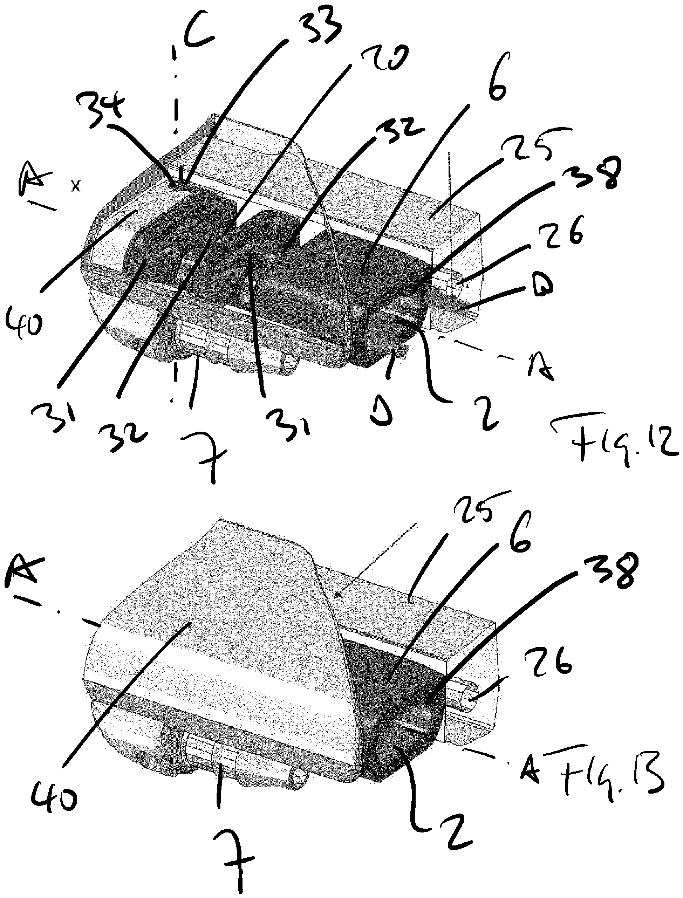

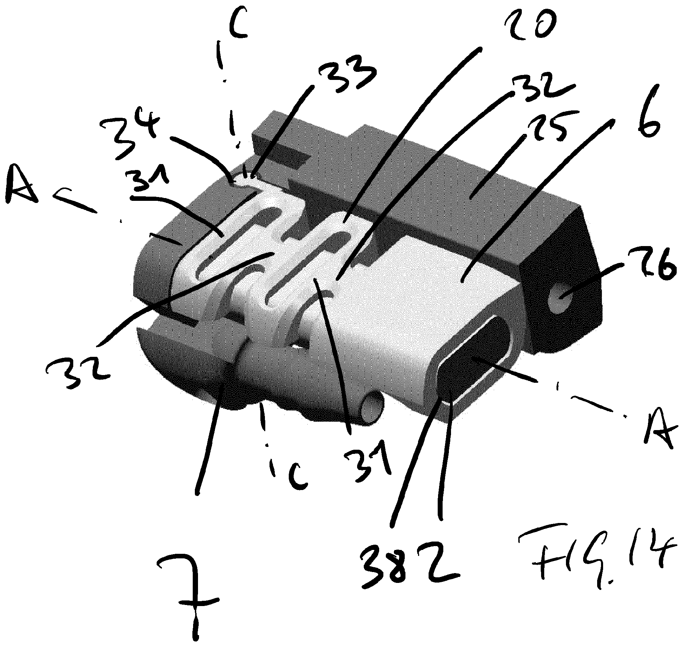

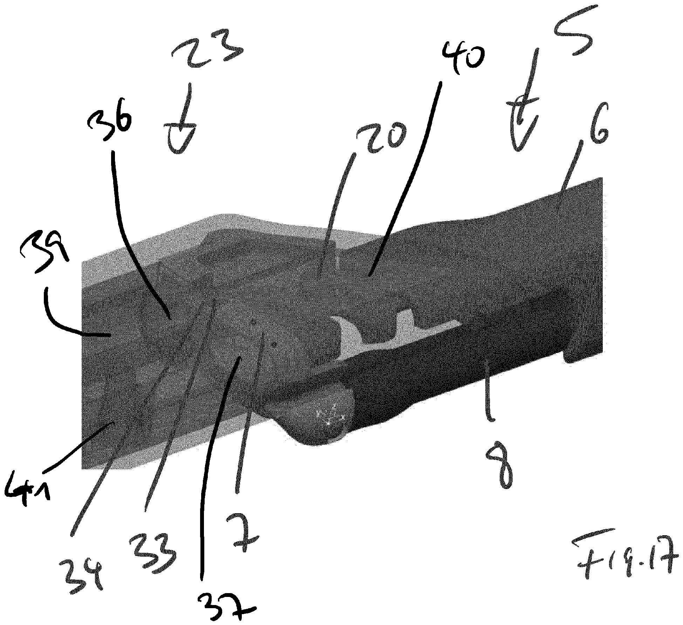

Fig. 12, 13 and 14 show a bloc-shaped part 25 of the connector piece that is arranged alongside the elastic connection 20. This bloc-shaped part 25 provides material that can be used for an internal channel 26 inside the connector piece 7 that leads the fluid from the hose interface to an interface where the fluid can be passed into a channel in the blade carrier 23. The channel 26 visible in Fig. 12, 13, 14 is only visible due to the sectional view used in Fig. 12, 13, 14. The channel 26 does not open towards the right hand side of the bloc-shaped part 25 in the Fig. 12, 13, 14. The interface 36 for the channel 39 in the blade carrier 23 is on the opposite, left-hand side of the bloc-shaped part 25 (see Fig. 17).

Fig. 12 and 13 also show part of a protruding endcover-portion 40 of the blade carrier 23 that protrudes outward from the end of the blade carrier 23 and covers the elastic connection 20.

Especially Fig. 12 and 13 show that the first linear section 2 can be a hollow shaft with a rectangular cross-section in planed perpendicular to the first longitudinal axis A.

The two arrows D in Fig. 12 show a force that is passed along the basic body 6 and taken up by the elastic connection 20. If the cover 5 and the blade carrier 23 are slid onto a first linear section 2 of a wiper arm 1 and abut against an endface 18 of a second linear section 3, like in the embodiments shown in Fig. 3, 4 and 5, application of a further force directed towards the endface 18 applied to the blade carrier 23 will lead to a reaction force symbolized by the two arrows D from the endface 18 onto the basic body 6. This reaction force will lead to the elastic connection 20 being compressed. If the blade carrier 23 is affixed to the first linear section 2 in a state of the elastic connection 20 where the elastic connection 20 is compressed, the elastic connection 20 will create a pre-tensioning force that presses the basic body 6 against the endface 18. A gap like the one shown in Fig. 7 will hence be avoided.

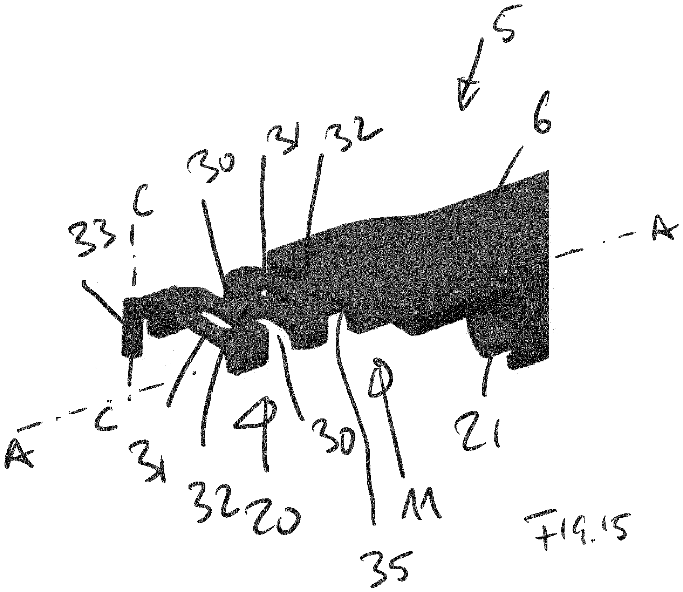

Fig. 15 shows a portion of the basic body 6 towards the first end 11. The view of Fig. 15 shows that the first end 11 has an endface 35 and that the bridge 32 that connects one of the ring-shaped elements 31 of the elastic connection 20 to the first end 11 protrudes from the endface 35 at the first end.

Fig. 15 also shows parts of the groove 21 that is arranged along the basic body 6 to take up a hose 8 (not shown in Fig. 15).

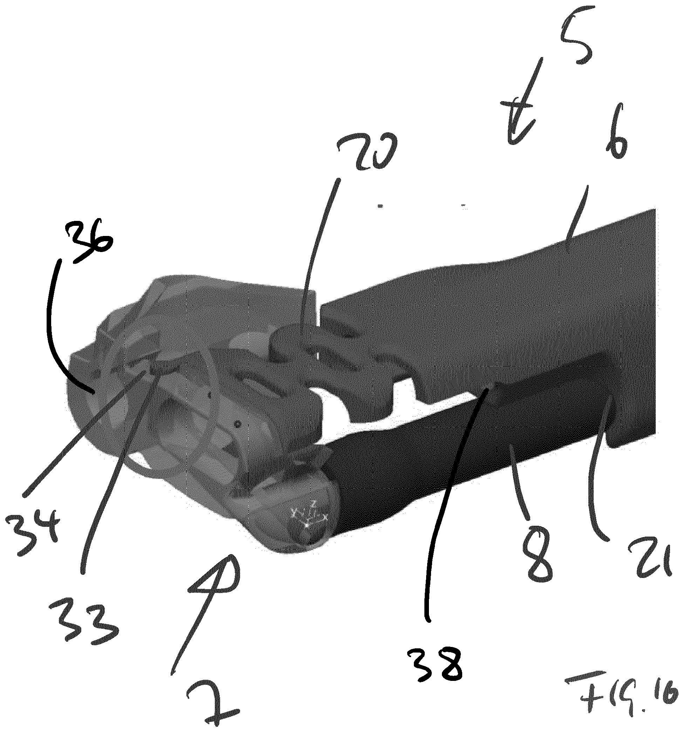

Fig. 16 shows the parts of Fig. 15 but with the connector piece 7 additionally attached to the elastic connection 20. Fig. 16 shows how the pin 33 is place in the socket 34 of the connector piece. Fig. 16 also shows, how a hose 8 has been connected to the hose interface. The hose is arranged in the groove 21.

The view of Fig. 16 shows the interface 36 at the end of the internal channel within the connector piece 7. Said internal channel leads from the hose interface to the interface 36.

Fig. 16 also shows that the connector piece 7 contains a through-hole 37 that can take up the first linear section 2 (not shown in Fig. 16). The first linear section 2 hence can be placed in a channel 38 inside the basic body 6 and inside the through-hole 37. As visible from Fig. 12, 13 and 14, the first linear section 2 passes uncovered below the elastic connection 20 from the channel 38 to the through-hole 37.

Fig. 17 shows the parts of Fig. 16 but also with a part of the blade carrier 23. The blade carrier 23 in the view of Fig. 17 is shown as see-through to better see the arrangement of parts. As described above, the blade carrier 23 has a protruding endcover-portion 40 that protrudes outward from the end of the blade carrier 23 and covers the elastic connection 20.

The blade carrier 23 has a channel 39 that passes along the blade carrier 23 to transport fluid along the blade carrier 23 to nozzles 41 arranged on the blade carrier. The nozzles 41 can be used to spray fluid transported along the hose 8, the internal channel of the connector piece 7 and the channel 39 onto the windscreen of a car.

The blade carrier 23 can be made of more elastic material than the connector piece 7. The blade carrier 23 can be overmolded over the connector piece 7.

The exploded view of Fig. 8 shows that the blade carrier 23 can have further nozzles 41 at the front end 42 of the blade carrier.

## Claims

1. Wiper arm (1) of a windscreen wiper, the wiper arm (1) having a first section (2) and a second section (3),
**characterized by** a cover (5) that comprises an elongated, flexible basic body (6), whereby the basic body (6) covers at least a portion of the first linear section (2) and at least a portion of the second linear section (3).

2. Wiper arm (1) according to claim 1, **characterized in that** the first section (2) is a first linear section (2) and the section section (3) is a second linear section (3), whereby the first linear section (2) extends along a first longitudinal axis (A) and the second linear section (3) extends along a second longitudinal axis (B), whereby the first linear axis (A) extends at an angle to the second linear axis (B),
**characterized by** a cover (5) that comprises an elongated, flexible basic body (6), whereby the basic body (6) covers at least a portion of the first linear section (2) and at least a portion of the second linear section (3).

3. Wiper arm (1) according to claim 1 or 2, **characterized in that** the second section (3) is arranged adjacent to the first section (2).

4. Wiper arm (1) of a windscreen wiper, the wiper arm (1) having a first linear section (2) and a second section that is arranged adjacent to the first linear section (2), whereby the first linear section (2) extends along a first longitudinal axis (A) and whereby the second section has an endface (18) and the first linear section (2) protrudes from the endface (18) and extends away from the endface (18) along the first longitudinal axis (A), whereby at the endface (18) the cross-section of the endface (18) is larger than the cross-section of the first linear section (2), **characterized by** a cover (5) that comprises an elongated, flexible basic body (6), whereby the basic body (6) covers at least a portion of the first linear section (2) and abuts against the endface (18).

5. Wiper arm according to claim 4, **characterized in that** the second section is a second linear section (3), whereby the second linear section (3) extends along a second longitudinal axis (B), whereby the first linear axis (A) extends at an angle to the second linear axis (B).

6. Wiper arm according to any one of claims 1 to 5, **characterized in that** the basic body (6) is pulled or pushed onto the wiper arm (1)

7. Wiper arm according to any one of claims 1 to 6, **characterized**
• **in that** a fluid channel (9) is arranged in the basic body (6)
and/or
• **in that** the cover (5) comprises a connector piece (7), the connector piece (7) having a hose interface suitable for a hose for a fluid to be connected to the hose interface.

8. Wiper arm according to claim 7, **characterized in that** the basic body (6) has a first end (11) and a second end (12), whereby the connector piece (7) is arranged at the first end (11) and whereby the basic body (6) has clips (16) for holding a hose (8) arranged in between the first end (11) and the second end (12).

9. Wiper arm according to any one of claims 1 to 8, **characterized in that** an elastic connection (20) is provided at one end of the basic body (6)

10. Cover (5) for a wiper arm (1) of a windscreen wiper, especially for a wiper arm (1) according to any one of claims 1 to 9, the cover (5) comprising
• an elongated basic body (6) extending from a first end (11) to a second end (12) along a longitudinal axis,
**characterized by** an elastic connection (20), whereby the elastic connection (20) is arranged at the first end (11) of the basic body (6)

11. Cover according to claim 10, **characterized by** a connector piece (7), the connector piece (7) having a hose interface suitable for a hose for a fluid to be connected to the hose interface, whereby the elastic connection (20) attaches the connector piece (7) to the basic body (6).

12. Cover according to claim 10 or 11 **characterized in that** the basic body (6) is made from an elastic material.

13. Cover according to claim 12 **characterized in that** the elasticity of the elastic connection (20) is higher than the elasticity of the basic body (6).

14. Cover according to any one of claims 10 to 13 **characterized in that** the elastic connection (20) contains cut-outs (30) to increase the elasticity of the elastic connection (20).

15. Cover according to any one of claims 10 to 14 **characterized in that** the elastic connection (20) is made as one piece with the basic body (6).

16. Cover according to any one of claims 10 to 16, **characterized in that** a blade carrier (23) is provided that extends from a first end to a second end along a longitudinal axis, whereby the blade carrier (23) is connected to the basic body (6) in by means of a pin (33).

17. Windscreen wiper comprising a wiper arm (1) and a wiper blade (22), **characterized by** a wiper arm according to any one of claims 1 to 9 and/or **characterized in that** a cover according to any one of claims 10 to 16 is attached to the wiper arm (1).

18. Method for connecting a cover to a wiper arm according to any one of claims 1 to 17, **characterized in** pulling or pushing the cover over the first linear section.

19. Method for connecting a cover according to any one of claims 10 to 16 to a wiper arm having a first section, especially to a wiper arm according to any one of claims 1 to 9, **characterized in pulling** or pushing the cover over the first section.
